Europäisches Patentamt

European Patent Office

Office européen des brevets

(11) Veröffentlichungsnummer: **0 189 928**
**A2**

(12) # EUROPÄISCHE PATENTANMELDUNG

(21) Anmeldenummer: 86101247.4

(22) Anmeldetag: 31.01.86

(51) Int. Cl.⁴: **C 04 B 28/04**
C 04 B 28/06
//(C04B28/04, 14:28, 22:00,
22:06, 22:12), (C04B28/06,
14:28, 22:00, 22:06, 22:12)

(30) Priorität: 01.02.85 DE 3503385

(43) Veröffentlichungstag der Anmeldung:
06.08.86 Patentblatt 86/32

(84) Benannte Vertragsstaaten:
AT BE CH DE FR GB IT LI

(71) Anmelder: -CM-Marner GmbH
Hölscher Strasse 2
D-4100 Duisburg(DE)

(72) Erfinder: Marner, Paul
Kaisersfeld 7
D-4330 Mülheim/Ruhr(DE)

(74) Vertreter: Patentanwaltsbüro Cohausz & Florack
Schumannstrasse 97
D-4000 Düsseldorf 1(DE)

(54) Hydromechanisch förderbarer Fertigmörtel.

(57) Die Erfindung betrifft einen hydraulisch förderbaren Fertigmörtel. Er enthält mineralische Zuschlagstoffe und Wasser und erstarrt kurzfristig bei Zugabe eines Erstarrungsmittels. Ungewöhnlich hohe Frühfestigkeiten werden bei einer Zusammensetzung des Fertigmörtels aus

300 bis 500 Gewichtsteilen Portlandzement
30 bis 50 Gewichtsteilen Tonerdeschmelzzement,
450 bis 650 Gewichtsteilen Kalkstein,
1 bis 5 Gewichtsteilen Kalkhydrat,
7 bis 15 Gewichtsteilen Betonfließmittel und
1 bis 4 Gewichtsteilen Erhärtungsbeschleuniger

erreicht. Der Mörtel wird mit 170 bis 220 Gewichtsteilen Wasser angemacht.

# COHAUSZ & FLORACK

### PATENTANWALTSBÜRO

### SCHUMANNSTR. 97 D-4000 DÜSSELDORF 1

Telefon: (02 11) 68 33 46          Telex: 0858 6513 cop d

**PATENTANWÄLTE:**

Dipl.-Ing. W COHAUSZ · Dipl.-Ing R KNAUF · Dipl.-Ing. H. B. COHAUSZ · Dipl.-Ing. D. H. WERNER

0189928

— 1 —

- CB-Marner GmbH          KN/HW   45007

  Hölscher Str. 2          30.1.1986

  4100 Duisburg

## Hydromechanisch förderbarer Fertigmörtel

Die Erfindung betrifft einen hydromechanisch förderbaren Fertigmörtel, der hydraulische Bindemittel, mineralische Zuschlagstoffe und Wasser enthält und bei Zugabe eines Erstarrungsmittels kurzfristig erstarrt.

Es ist bekannt, die Erstarrungszeit von hydromechanisch förderbaren Mörteln durch Zugabe von Betonerstarrungsmitteln zu verringern. Die Entfestigkeiten dieser Mörtel sind jedoch wesentlich geringer als die der normal bindenden Mörtel. Hydromechanisch förderbare Mörtel als Spritzmörtel erfordern für die Verarbeitung ein hohes Wasser-Feststoff-Verhältnis sowie eine hohe Dosierung des Betonerstarrungsmittels, die die Festigkeit herabsetzt.

Der Erfindung liegt die Aufgabe zugrunde, einen hydromechanisch förderbaren Fertigmörtel zu schaffen, der bei Zugabe eines Erstarrungsmittels kurzfristig erstarrt und höhere Frühfestigkeiten als die bekannten Mörtel aufweist.

Diese Aufgabe wird erfindungsgemäß durch die kennzeichnenden Merkmale des Hauptanspruchs gelöst.

Vor der Zugabe des Erstarrungsmittels ist der angemachte Fertigmörtel mindestens ein bis zwei Stunden förder- und verarbeitbar, sogar bei einer Baustofftemperatur von etwa 30 ° C und erreicht nach Zugabe des Erstarrungsmittels dennoch eine ungewöhnlich hohe Festigkeit, so daß er als soforttragender Baustoff eingesetzt werden kann. Ein weiterer Vorteil besteht darin, daß er nicht gesundheitsschädlich ist.

Der im Fertigmörtel enthaltene Kalkstein kann zur Verbesserung der Festigkeit mehrere unterschiedliche Körnungen aufweisen. Ein zusätzlich im Fertigmörtel enthaltener Entschäumer verringert die Luftporen im Mörtel und vergrößert damit ebenfalls die Festigkeit.

Eine weitere Verbesserung der Festigkeit wird dadurch erreicht, daß der im Fertigmörtel enthaltene Erhärtungsbeschleuniger aus Kalziumchlorid besteht. Vorteilhaft ist auch die Verwendung von Portlandzement einer höheren Festigkeitsklasse.

Der Fertigmörtel läßt sich vorteilhaft auch unter Tage verwenden, da er auch im trocknen Zustand den besonderen Anforderungen im Bergbau genügt. So enthält der Mörtel zur Verringerung von gesundheitlichen Schäden als mineralischen Zuschlagstoff Kalkstein anstelle von Quarzsand. Insbesondere kann der Fertigmörtel in einem Spritzverfahren als sogenannter Konsolidierungsmörtel zur Ausbruchverfüllung im Streb vorteilhaft verwendet werden. Dabei werden der angemachte Fertigmörtel und ein flüssiges Erstarrungsmittel zu einer Düse hydromechanisch gefördert und miteinander in der Düse gemischt. Die ebenfalls zur Düse geführte Druckluft trägt zur Beschleunigung des Mörtels in Vorwärtsrichtung bei.

Gegenüber dem üblichen Verfahren erhöht dieses Spritzverfahren die Unfallsicherheit wegen der hohen Frühfestigkeit. Ein weiterer Vorteil iegt in der Wirtschaftlichkeit des Verfahrens, da schon kurze Zeit nach dem Aufspritzen die durch den Ausbruch unterbrochene Arbeit fortgesetzt werden kann.

Neben dem hydromechanischen Spritzverfahren ist ein pneumatisches bekannt, in dem der noch nicht angemachte pulverförmige Mörtel erst an der Düse mit Wasser gemischt wird. Das pneumatische Verfahren ist jedoch unwirtschaftlicher und erfordert Maßnahmen zur Staubbekämpfung.

Der erfindungsgemäße Mörtel und das Verfahren lassen sich u.a. vorteilhaft unter Tage anwenden, da auch unter den dort herrschenden höheren Temperaturen der Mörtel noch mehr als eine Stunde verarbeitbar ist.

Zur schnellen Erstarrung des Fertigmörtels werden vorzugsweise etwa 3 bis 18 Volumenprozent eines Erstarrungsmittels, bezogen auf das Volumen der Trockenmischung, insbesondere Wasserglas oder eine wasserglasähnliche Substanz

0189928

zugegeben. Eine Zugabe von 5 Volumenprozent des Erstarrungsmittels bewirkt eine plastische Konsistenz des vor der Zugabe fließfähigen Mörtels, daß er ohne abzurutschen gut am Spritzuntergrund haftet und schichtförmig aufzubauen ist. Werden 15 Volumenprozent des Erstarrungsmittels zugegeben, behält der Mörtel seinen flüssigen Zustand bei, erstarrt aber auf dem Spritzuntergrund schlagartig ohne abzurutschen. Die Spritzoberfläche ist nach dem Erstarren sehr gleichmäßig und geschlossen. Die bei Zugabe von 15 Volumenprozent des Erstarrungsmittels erstellten Bauwerke weisen kurze Zeit nach dem Aufspritzen eine noch höhere Druckfestigkeit als bei Zugabe von 5 Volumenprozent des Erstarrungsmittels auf.

Die Klebkraft dieses Mörtels ist so groß, daß der Verlust durch Rückprall unter 5 % der Materialmenge liegt.

Bewährt hat sich für die Erstellung von Bauwerken unter Tage die folgende Zusammensetzung des erfindungsgemäßen Fertigmörtels:

450 Gewichtsteile Portlandzement höherer Festigkeitsklasse (ab etwa PZ 45)

35 Gewichtsteile Tonerdeschmelzzement,

200 Gewichtsteile Kalksteinmehl,

300 Gewichtsteile Kalkstein mit 1 mm Körnung,

4 Gewichtsteile Kalkhydrat,

2 Gewichtsteile Kalziumchlorid (85%),

9 Gewichtsteile Betonfließmittel,

0,03 Gewichtsteile Entschäumer.

Zum Anmachen der Mischung werden 190 Gewichtsteile Wasser hinzugefügt.

0189928

Bei Zugabe von 5 bzw. 15 Volumenprozent des Erstarrungsmittels werden nach 15 Minuten einachsige Druckfestigkeiten von 0,3 N/mm² bzw. 2,5 N/mm² erreicht.

Es versteht sich, daß die Körnung des Kalksteins und damit das Zement/Zuschlagstoff-Verhältnis geändert werden können, um das Größtkorn des Mörtels an die Verarbeitungsmaschinen anzupassen. In einem gewissen Umfang können auch die Gewichtsverhältnisse der einzelnen Komponenten geändert werden.

# COHAUSZ & FLORACK  0189928

### PATENTANWALTSBÜRO
### SCHUMANNSTR. 97  D·4000 DÜSSELDORF 1
Telefon: (02 11) 68 33 46          Telex. 08 58 65 13 cop d

PATENTANWALTE:

Dipl.-Ing. W. COHAUSZ  ·  Dipl.-Ing. R KNAUF  ·  Dipl.-Ing. H. B. COHAUSZ  ·  Dipl.-Ing. D. H. WERNER

KN/HW 45007EP

30.1.1986

Ansprüche:

1. Hydromechanisch förderbarer Fertigmörtel, der hydraulische Bindemittel, mineralische Zuschlagstoffe und Wasser enthält und bei Zugabe eines insbesondere flüssigen Erstarrungsmittels kurzfristig erstarrt, d a - d u r c h  g e k e n n z e i c h n e t, daß der Fertigmörtel

300 bis 500 Gewichtsteile Portlandzement,
 30 bis  50 Gewichtsteile Tonerdeschmelzzement,
450 bis 650 Gewichtsteile Kalkstein,
  1 bis   5 Gewichtsteile Kalkhydrat,
  7 bis  15 Gewichtsteile Betonfließmittel und
  1 bis   4 Gewichtsteile Erhärtungsbeschleuniger

enthält und mit 170 bis 210 Gewichtsteilen Wasser angemacht wird.

2. Fertigmörtel nach Anspruch 1, d a d u r c h  g e - k e n n z e i c h n e t, daß er Kalkstein in mehreren unterschiedlichen Körnungen enthält.

3. Fertigmörtel nach Anspruch 1 oder 2, d a d u r c h g e k e n n z e i c h n e t , daß er 0,01 bis 0,05 Gewichtsteile eines Entschäumers enthält

4. Fertigmörtel nach einem der Ansprüche 1 bis 3, d a d u r c h g e k e n n z e i c h n e t , daß der Erhärtungsbeschleuniger aus Kalziumchlorid besteht.

5. Fertigmörtel nach einem der Ansprüche 1 bis 4, d a d u r c h g e k e n n z e i c h n e t , daß er Portlandzemente einer höheren Festigkeitsklasse enthält.

6. Verwendung eines Fertigmörtels nach einem der Ansprüche 1 bis 5 zur Erstellung eines Bauwerks d a d u r c h g e k e n n z e i c h n e t , daß das das Bauteil oder Bauwerk in einem Spritzverfahren hergestellt wird, wobei der angemachte und hydromechanisch geförderte Fertigmörtel und das flüssige Erstarrungsmittel zu einer Düse gefördert und erst in der Düse in Verbindung mit Druckluft miteinander gemischt werden.

7. Verfahren nach Anspruch 6, d a d u r c h g e k e n n z e i c h n e t , daß es unter Tage angewandt wird.

8. Verfahren nach Anspruch 6 oder 7, d a d u r c h g e k e n n z e i c h n e t , daß die Menge des zur schnellen Erstarrung des Fertigmörtels zugegebenen Erstarrungsmittels ungefähr 3 - 18, insbesondere 5 oder 15 Volumenprozent der Trockenmischung beträgt.

0189928

9. Verfahren nach einem der Ansprüche 6 bis 8, d a d u r c h   g e k e n n z e i c h n e t, daß das dem Fertigmörtel zugegebene Erstarrungsmittel Wasserglas oder eine verwandte Substanz ist.

10. Verfahren nach einem der Ansprüche 6 - 8, d a d u r c h   g e k e n n z e i c h n e t, daß das dem Fertigmörtel zugegebene Erstarrungsmittel Natriumaluminat oder eine verwandte Substanz ist.